(19) Europäisches Patentamt
European Patent Office
Office européen des brevets

(11) EP 2 448 979 B1

(12) **EUROPEAN PATENT SPECIFICATION**

(45) Date of publication and mention of the grant of the patent:
**01.05.2013 Bulletin 2013/18**

(21) Application number: **10730333.1**

(22) Date of filing: **01.07.2010**

(51) Int Cl.:
***C08F 10/02*** *(2006.01)* ***C08L 23/04*** *(2006.01)*
***C08J 5/18*** *(2006.01)*

(86) International application number:
**PCT/US2010/040791**

(87) International publication number:
**WO 2011/002998 (06.01.2011 Gazette 2011/01)**

(54) **ETHYLENIC POLYMER AND ITS USE**

ETHYLENPOLYMER UND SEINE VERWENDUNG

POLYMÈRE ÉTHYLÉNIQUE ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.07.2009 US 222379 P**

(43) Date of publication of application:
**09.05.2012 Bulletin 2012/19**

(73) Proprietor: **Dow Global Technologies LLC**
**Midland, MI 48674 (US)**

(72) Inventors:
- **TAHA, Angela**
**Monterey**
**CA 93940 (US)**
- **ONER-DELIORMANLI, Didem**
**Pearland**
**TX 77584 (US)**
- **WALTON, Kim**
**Lake Jackson**
**TX 77566 (US)**
- **QIU, XiaoHua**
**Midland**
**MI 48642 (US)**
- **HE, Yiyong**
**Midland**
**MI 48642 (US)**

(74) Representative: **Raynor, John**
**Beck Greener**
**Fulwood House**
**12 Fulwood Place**
**London**
**WC1V 6HR (GB)**

(56) References cited:
**WO-A1-00/68285** **WO-A1-2009/097222**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 448 979 B1

## Description

### BACKGROUND OF THE INVENTION

Metallocene-catalyzed polymers have been commercial for several years, and are used in many end-use applications, such as packaging, personal hygiene, automotive, flooring, adhesives, fibers, nonwovens, films, sheets, and fabrics. The metallocene-catalyzed polymers have certain advantages, such as narrow molecular weight distributions. Some of the metallocene-catalyzed polymers are homogeneous polymers that have long chain branching which enhances their processability. However, metallocene-catalyzed polymers are still subject to degradation under ultraviolet light and have cross-linking characteristics that make their use in certain applications more challenging. Further, those metallocene-catalyzed polymers which have relatively high levels of long chain branching typically exhibit poor hot tack strength and/or a narrow sealing window, which renders them less useful in certain film applications.

Known metallocene-catalyzed polymers include both (a) the homogeneous-branched, substantially linear ethylene polymers ("SLEP") which are prepared using constrained geometry catalysts ("CGC Catalyst"), such as disclosed in USP 5,272,236 and USP 5,278,272, and WO93/08221, as well as the homogeneous linear ethylene polymers ("LEP") which are prepared using other metallocene (called "bis-CP catalysts"). Various grades of SLEPs, having a variety of densities and melt flow rates, are commercially available from The Dow Chemical Company as ENGAGE™ polyolefin elastomers or AFFINITY™ plastomers. Various grades of LEPs are commercially available from ExxonMobil Chemical Company as EXACT™ or EXCEED™ polymers.

A characteristic of metallocene-catalyzed polymers is that they have a significant level (typically in excess of 300 wppm) of residual unsaturation, with that unsaturation being in various combinations and amounts of one or more of the following unsaturated groups:

Vinyl, vinylidene, vinylene, vinyl-3, and tri-substituted vinyls.

Such residual unsaturations, and particularly the vinyl-3 groups, are believed to contribute to long-term polymer degradation, as well as to difficulties in controlling either or both of desired cross-linking in some applications or undesired cross-linking (such as the formation of gels) in other end-use applications (such as films).

Further, for film applications, it is desirable to have a broad thermal bonding window (temperature range) as well as relatively low hot tack initiation temperature.

### BRIEF SUMMARY OF THE INVENTION

In a first embodiment of the invention, there is provided an ethylenic polymer comprising: an overall polymer density of not more than 0.905 g/cm$^3$; total unsaturation of not more than 125 per 100,000 carbons; and a GI200 gel rating of not more than 15; up to 3 long chain branches/1000 carbons; vinyl-3 content of less than 5 per 100,000 carbons; and a total number of vinyl groups/1000 carbons of less than the quantity (8000/$M_n$), wherein the vinyl-3 content and vinyl group measurements are measured by gel permeation chromatography (145°C) and $^1$H-NMR (125°C).

The ethylenic polymer preferably comprises a ratio of vinyl groups to total olefin groups according to the formula:

VG/TOG > (comonomer mole percentage/0.1)$^a$ x 10$^a$ x 0.8
where a = -0.24, VG = vinyl groups, and TOG = total olefin groups.

The ethylenic polymer can also preferably comprise total unsaturation of from about 10 to about 125 per 100,000 carbons total unsaturation; and up to 3 long chain branches/1000 carbons; and a GI200 gel rating of not more than 15.

The ethylenic polymer can also comprise a vinyls amount and a total unsaturation amount, wherein the ratio of vinyls amount:total unsaturation amount is at least 0.2:1, preferably at least 0.3:1, more preferably at least from about 0.4:1 to about 0.8:1; and the ethylenic polymer can have less than 5 per 100,000 carbons of vinyl-3 content. The ethylenic polymer can also have less than 5 per 100,000 carbons of vinyl-3 content.

Another embodiment of the invention are compositions comprising, or made from, at least one ethylenic polymer disclosed herein, wherein at least a portion of the ethylenic polymer has been cross-linked, or functionalized.

Composition comprising, or made from, at least one ethylenic polymer disclosed herein and at least one other natural or synthetic polymer, preferably selected from the group consisting of at least one thermoplastic, at least one elastomeric olefin polymer and at least one styrenic block copolymer, are also contemplated. Other compositions comprising, or made from, at least one ethylenic polymer disclosed herein and at least one other component selected from the group consisting of a tackifier, a wax, and an oil are also contemplated.

Compositions comprising a dispersion or emulsion of particles in a fluid are also an embodiment of the invention, wherein the particles comprise, or are made from, at least one ethylenic polymer disclosed herein.

Another embodiment includes an ethylenic polymer comprising: an overall polymer density of not more than 0.9 g/cm$^3$; total unsaturation of not more than 125 per 100,000 carbons; a GI200 gel rating of not more than 15; vinyl-3 content of less than 5 per 100,000 carbons; and a vinyls amount and a total unsaturation amount, wherein the ratio of vinyls amount:total unsaturation amount is between 0.4:1 and 0.8:1.

Fabricated articles in which at least one layer or portion of the fabricated article comprises, or is made from, at least one ethylenic polymer of the invention are also claimed, preferably in which the fabricated article comprises a film, a sheet, a fiber, a nonwoven, a laminate, or a composite.

DETAILED DESCRIPTION OF THE INVENTION

Definitions

"Composition," as used, includes a mixture of materials which comprise the composition, as well as reaction products and decomposition products formed from the materials of the composition.

"Blend" or "polymer blend," as used, mean an intimate physical mixture (that is, without reaction) of two or more polymers. A blend may or may not be miscible (not phase separated at molecular level). A blend may or may not be phase separated. A blend may or may not contain one or more domain configurations, as determined from transmission electron spectroscopy, light scattering, x-ray scattering, and other methods known in the art. The blend may be effected by physically mixing the two or more polymers on the macro level (for example, melt blending resins or compounding) or the micro level (for example, simultaneous forming within the same reactor).

"Linear," as used, refers to polymers where the polymer backbone of the polymer lacks measurable or demonstrable long chain branches, for example, the polymer is substituted with an average of less than 0.01 long branch per 1000 carbons.

"Polymer" refers to a polymeric composition prepared by polymerizing monomers, whether of the same or a different type. The generic term "polymer" thus embraces the term "homopolymer," usually employed to refer to polymers prepared from only one type of monomer, and the term "interpolymer" as defined. The terms "ethylene/$\alpha$-olefin polymer" is indicative of interpolymers as described.

"Interpolymer," as used, refers to polymers prepared by the polymerization of at least two different types of monomers. The generic term interpolymer includes copolymers (usually employed to refer to polymers prepared from two different monomers) and polymers prepared from more than two different types of monomers.

"Ethylenic polymer" refers to a polymer that contains more than 50 mole percent polymerized ethylene monomer (based on the total amount of polymerizable monomers) and, optionally, may contain one or more comonomers.

The term "ethylene/$\alpha$-olefin interpolymer" refers to an interpolymer that contains more than 50 mole percent polymerized ethylene monomer (based on the total amount of polymerizable monomers) and at least one $\alpha$-olefin.

**Test Methods and Measurements**

*Density:* The density of a polymer (g/cm$^3$) is measured according to ASTM-D 792-03, Method B, in isopropanol. Specimens are measured within 1 hour of molding after conditioning in the isopropanol bath at 23°C for 8 min to achieve thermal equilibrium prior to measurement. The specimens are compression molded according to ASTM D-4703-00 Annex A with a 5 min initial heating period at about 190°C and a 15°C/min cooling rate per Procedure C. The specimen is cooled to 45°C in the press with continued cooling until "cool to the touch."

***Melt Indices and Melt Index Ratio:*** The melt index ($I_2$) of a polymer is measured in accordance with ASTM D 1238, Condition 190 °C/2.16 kg, and is reported in grams eluted per 10 minutes, and the melt index ($I_{10}$) is measured in accordance with ASTM D 1238, Condition 190 °C/10 kg, and is reported in grams eluted per 10 minutes. The melt index ratio ($I_{10}/I_2$) is a ratio of these two melt indices.

***Differential Scanning Calorimetry:*** Differential Scanning Calorimetry (DSC) can be used to measure the melting and crystallization behavior of a polymer over a wide range of temperature. For example, the TA Instruments Q1000 DSC, equipped with an RCS (refrigerated cooling system) and an autosampler is used to perform this analysis. During testing, a nitrogen purge gas flow of 50 ml/min is used. Each sample is melt pressed into a thin film at about 175 °C; the melted sample is then air-cooled to room temperature (~25 °C). A 3-10 mg, 6 mm diameter specimen is extracted from the cooled polymer, weighed, placed in a light aluminum pan (ca 50 mg), and crimped shut. Analysis is then performed to determine its thermal properties. The thermal behavior of the sample is determined by ramping the sample temperature up and down to create a heat flow versus temperature profile. First, the sample is rapidly heated to 180 °C and held isothermal for 3 minutes in order to remove its thermal history. Next, the sample is cooled to -40 °C at a 10 °C/minute cooling rate and held isothermal at -40 °C for 3 minutes. The sample is then heated to 150 °C (this is the "second heat" ramp) at a 10 °C/minute heating rate. The cooling and second heating curves are recorded. The cool curve is analyzed by setting baseline endpoints from the beginning of crystallization to -20 °C. The heat curve is analyzed by

setting baseline endpoints from -20 °C to the end of melt. The values determined are peak melting temperature ($T_m$), peak crystallization temperature ($T_c$), heat of fusion ($H_f$) (in Joules per gram), and the calculated % crystallinity for polyethylene samples using:

$$\% \text{ Crystallinity} = ((H_f)/(292 \text{ J/g})) \times 100.$$

The heat of fusion ($H_f$) and the peak melting temperature are reported from the second heat curve. Peak crystallization temperature is determined from the cooling curve.

**Molecular Weight Measurements by Gel Permeation Chromatography (GPC):** The GPC system consists of a Waters (Milford, MA) 150C high temperature chromatograph (other suitable high temperatures GPC instruments include Polymer Laboratories (Shropshire, UK) Model 210 and Model 220) equipped with an on-board differential refractometer (RI). Additional detectors can include an IR4 infra-red detector from Polymer ChAR (Valencia, Spain), Precision Detectors (Amherst, MA) 2-angle laser light scattering detector Model 2040, and a Viscotek (Houston, TX) 150R 4-capillary solution viscometer. A GPC with the last two independent detectors and at least one of the first detectors is sometimes referred to as "3D-GPC", while the term "GPC" alone generally refers to conventional GPC. Depending on the sample, either the 15-degree angle or the 90-degree angle of the light scattering detector is used for calculation purposes. Data collection is performed using Viscotek TriSEC software, Version 3, and a 4-channel Viscotek Data Manager DM400. The system is also equipped with an on-line solvent degassing device from Polymer Laboratories (Shropshire, UK). Suitable high temperature GPC columns can be used such as four 30 cm long Shodex HT803 13 micron columns or four 30 cm Polymer Labs columns of 20-micron mixed-pore-size packing (MixA LS, Polymer Labs). The sample carousel compartment is operated at 140 °C and the column compartment is operated at 150 °C. The samples are prepared at a concentration of 0.1 grams of polymer in 50 milliliters of solvent. The chromatographic solvent and the sample preparation solvent contain 200 ppm of butylated hydroxytoluene (BHT). Both solvents are sparged with nitrogen. The polyethylene samples are gently stirred at 160 °C for four hours. The injection volume is 200 microliters. The flow rate through the GPC is set at 1 ml/minute.

The GPC column set is calibrated before running the polymer by running twenty-one narrow molecular weight distribution polystyrene standards. The molecular weight (MW) of the standards ranges from 580 to 8,400,000 grams per mole, and the standards are contained in 6 "cocktail" mixtures. Each standard mixture has at least a decade of separation between individual molecular weights. The standard mixtures are purchased from Polymer Laboratories (Shropshire, UK). The polystyrene standards are prepared at 0.025 g in 50 mL of solvent for molecular weights equal to or greater than 1,000,000 grams per mole and 0.05 g in 50 ml of solvent for molecular weights less than 1,000,000 grams per mole. The polystyrene standards were dissolved at 80 °C with gentle agitation for 30 minutes. The narrow standards mixtures are run first and in order of decreasing highest molecular weight component to minimize degradation. The polystyrene standard peak molecular weights are converted to polyethylene $M_w$ using the Mark-Houwink K and a (sometimes referred to as $\alpha$) values mentioned later for polystyrene and polyethylene.

With 3D-GPC absolute weight average molecular weight ("$M_{w,\ Abs}$") and intrinsic viscosity are also obtained independently from suitable narrow polyethylene standards using the same conditions mentioned previously. These narrow linear polyethylene standards may be obtained from Polymer Laboratories (Shropshire, UK; Part No.'s PL2650-0101 and PL2650-0102).

The systematic approach for the determination of multi-detector offsets is performed in a manner consistent with that published by Balke, Mourey, et al. (Mourey and Balke, Chromatography Polym., Chapter 12, (1992)) (Balke, Thitiratsakul, Lew, Cheung, Mourey, Chromatography Polym., Chapter 13, (1992)), optimizing triple detector log (Mw and intrinsic viscosity) results from Dow 1683 broad polystyrene (American Polymer Standards Corp.; Mentor, OH) or its equivalent to the narrow standard column calibration results from the narrow polystyrene standards calibration curve. The molecular weight data, accounting for detector volume off-set determination, are obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)). The overall injected concentration used in the determination of the molecular weight is obtained from the mass detector area and the mass detector constant derived from a suitable linear polyethylene homopolymer, or one of the polyethylene standards. The calculated molecular weights are obtained using a light scattering constant derived from one or more of the polyethylene standards mentioned and a refractive index concentration coefficient, dn/dc, of 0.104. Generally, the mass detector response and the light scattering constant should be determined from a linear standard with a molecular weight in excess of about 50,000 daltons. The viscometer calibration can be accomplished using the methods described by the manufacturer or alternatively by using the published values of suitable linear standards such as Standard Reference Materials (SRM) 1475a, 1482a, 1483, or 1484a. The chromatographic concentrations are assumed low enough to eliminate addressing $2^{nd}$ viral coefficient effects (concentration effects on molecular weight).

**C13 NMR Comonomer Content:** It is well known to use NMR spectroscopic methods for determining polymer composition. ASTM D 5017-96, J. C. Randall et al., in "NMR and Macromolecules" ACS Symposium series 247, J. C. Randall, Ed., Am. Chem. Soc., Washington, D.C., 1984, Ch. 9, and J. C. Randall in "Polymer Sequence Determination", Academic Press, New York (1977) provide general methods of polymer analysis by NMR spectroscopy. Polymer samples for $^{13}C$ NMR analysis were prepared as 6 wt% solutions. The solvent was a 5/95 (wt/wt) mixture of paradichlorobenzene-d4 and orthodichlororbenzene with 0.025 M chromium actetylacetonate added as the relaxation agent. Typically, 0.2 g of polymer was dissolved in 2.5 g of the solvent mixture in a 10 mm NMR tube. After N2 purge, the NMR tube was capped and heated in a heating block set at 150 °C to dissolve the polymer. Samples were vortexed during heating to facilitate sample homogenization. Once the sample/solvent achieved the appearance of a single phase and flowed consistently, the sample tube was left in the heating block for more than 24 hours for homogenization purpose.

A Varian Inova 400 MHz system was used to take $^{13}C$ NMR spectra. The following parameters were used: temperature at 400K, 25,000 Hz spectral width, 1.3 second acquisition time, 90 degree pulse, 6 seconds relaxation delay, 8000 scans, and inverse gated decoupling with Waltz modulation. The free induction decay (FID) files were processed using NUTS. The spectrum was apodized with a cosine function. It was then zero filled once and Fourier Transformed. The spectrum was phased and baseline corrected manually. A pre-defined integral range was applied to generate a list of integrals in the chemical shift ranges specified in XH. Qiu, O.D. Redwine, G. Gobbi, A. Nuamthanom, P.L. Rinaldi, Macromolecules, 40, 6879 (2007). The "linear least-squares analysis with the constraint" (in M.R. Seger, G.E. Maciel, Anal. Chem., 76, 5734 (2004)) was used to analyze the integral list for composition and triad distribution.

**Residual Unsaturations determined by $^1H$ Nuclear Magnetic Resonance (NMR):** Samples for $^1H$ NMR experiments were prepared by dissolving polymers in a solvent mixture, tetrachloroethane-$d_2$/perchloroethylene (50/50 v/v), in standard NMR tubes. The tubes were then heated in a heating block set at 115 °C until polymers are completely dissolved. The $^1H$ NMR spectra were taken on a Varian Inova 600 MHz spectrometer using a broadband inverse probe. For each sample, two experiments were performed. The first is a standard single pulse $^1H$ NMR experiment to quantify the polymer peak relative to the solvent peak. The second is a presaturated $^1H$ NMR experiment to suppress the polymer backbone peak (~1.4ppm). The end groups were then quantified by referencing to the same solvent peak. The following acquisition parameters were used: $5*T_1$ relaxation delay, 90 degree pulse of 8 $\mu s$, 2 s acquisition time, 0.5 second presaturation time with satpwr = 1, 128-256 scans. The spectra are centered at 4 ppm with a spectral width of 10000 Hz. All measurements were taken without sample spinning at 110 $\pm$ 1 °C. The $^1H$ NMR spectra were referenced to 5.99 ppm for the resonance peak of the solvent (residual protonated tetrachloroethane).

| Group | Structure | Notation | $\delta$(ppm) | *J* ( $\pm$ 0.5 Hz) |
|---|---|---|---|---|
| Vinylene | 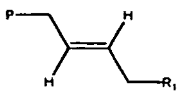 | Vy1-*trans* | 5.49 | Triplet (3.8) |
| | 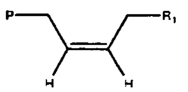 | Vy1-*cis* | 5.44 | Triplet (4.4) |
| | 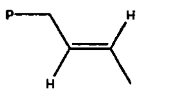 | Vy2-*trans* | ~5.52 | multiplet |
| | 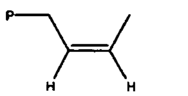 | Vy2-*cis* | ~5.49 | multiplet |
| | 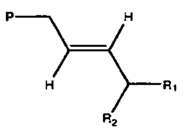 | Vy3 | 5.43<br>5.26 | Dual-triplet (15.0, 7.0)<br>Dual-doublet (15.3, 7.8) |

(continued)

| Group | Structure | Notation | δ(ppm) | *J* ( ± 0.5 Hz) |
|---|---|---|---|---|
| Trisubstituted unsaturation | 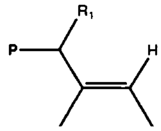 | T1-*trans* | 5.28 | Quartet (6.4) |
| | 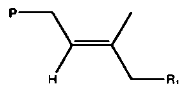 | T2-*cis* | 5.23<br>5.22 | Triplet (6.5)<br>Triplet (6.5) |
| | 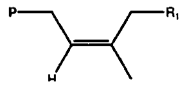 | T2-*trans* | | |
| | 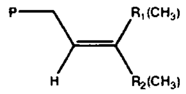 | T3<br>T4<br>T5 | 5.23<br>5.20<br>5.18 | Triplet (6.2)<br>Triplet (~6)<br>Triplet (?) |
| | 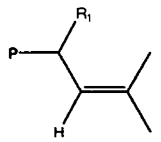 | T6 | 4.95 | |
| Vinyl | 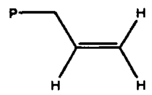 | V1 | 5.90<br>5.07<br>5.01 | Dual-dual-triplet<br>Doublet (17.1)<br>Doublet (10.3) |
| | 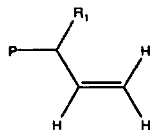 | V2 | 5.67<br>-5.03 | |
| Vinylidene | 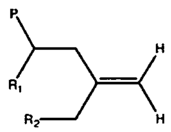 | Vd1 | 4.86<br>4.81 | Singlet<br>Singlet |
| | 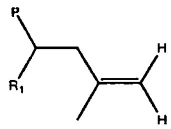 | Vd2 | 4.83<br>4.76 | Singlet<br>Singlet |
| | 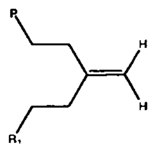 | Vd3 | 4.80 | Singlet |

***Gel rating of the polymers***

**Gels**

Method/Description of GI200 test

Extruder: Model OCS ME 20 available from OCS Optical Control Systems GmbH Wullener Feld 36, 58454 Witten, Germany or equivalent.

| | |
|---|---|
| Parameter | Standard Screw |
| L/D | 25/1 |
| Coating | Chrome |
| Compression ratio | 3/1 |
| Feed Zone | 10D |
| Transition Zone | 3D |
| Metering Zone | 12D |
| Mixing Zone | --- |

Cast Film Die: ribbon die, 150 x 0.5 mm, available from OCS Optical Control Systems GmbH, or equivalent.
Air Knife: OCS air knife to pin the film on the chill roll, available from OCS Optical Control Systems GmbH, or equivalent.
Cast Film Chill Rolls and Winding Unit: OCS Model CR-8, available fro OCS Optical Control Systems GmbH, or equivalent.

| **Profile Number** | | **070** | **071** | **072** |
|---|---|---|---|---|
| MELT INDEX | dg/min | 0.1-1.2 | 1.2-3.2 | 3.2-32 |
| Density | $g/cm^3$ | ALL | ALL | ALL |
| Throat | °C | 25 ± 3 | 25 ± 3 | 25 ± 3 |
| Zone 1 | °C | 180 ± 5 | 160 ± 5 | 140 ± 5 |
| Zone 2 | °C | 240 ± 5 | 190 ± 5 | 170±5 |
| Zone 3 | °C | 260 ± 5 | 200 ± 5 | 175 ± 5 |
| Zone 4 | °C | 260 ± 5 | 210 ± 5 | 175 ± 5 |
| Adapter | °C | 260 ± 5 | 225 ± 5 | 180 ± 5 |
| Die | °C | 260 ± 5 | 225 ± 5 | 180 ± 5 |
| Screw Type | | Standard | Standard | Standard |
| Screw Speed | RPM | 70 ± 2 | 70 ± 2 | 70 ± 2 |
| Air Knife Flow | $Nm^3/h$ | 6 ± 2 | 6 ± 2 | 6 ± 2 |
| Die to Chill Roll | mm | 6 ± 1 | 6 ± 1 | 6 ± 1 |
| Die to Air Knife | mm | 6 ± 1 | 6 ± 1 | 6 ± 1 |
| Chill Speed | m/min. | 3 ± 1 | 3 ± 1 | 3 ± 1 |
| Chill Temp. | °C | 20 ± 2 | 20 ± 2 | 20 ± 2 |
| Tension Speed | m/min. | 6 ± 2 | 6 ± 2 | 6 ± 2 |
| Winder Torque | N | 8 ± 1 | 8 ± 1 | 8 ± 1 |
| Lab Temperature | °C | 23 ± 2 | 23 ± 2 | 23 ± 2 |
| Lab Humidity | % | <70 | <70 | <70 |
| Width | mm | 108 ± 18 | 108 ± 18 | 108 ± 18 |
| Thickness | μm | 76 ± 5 | 76 ± 5 | 76 ± 5 |

Gel Counter: OCS FS-3 line gel counter consisting of a lighting unit, a CCD detector and an image processor with the Gel counter software version 3.65e 1991-1999, available from OCS Optical Control Systems GmbH, or equivalent. The OCS FS-5 gel counter is equivalent.

Instantaneous GI200

*Note: GI stands for "gel index". GI200 includes all gels ≥ 200 μm in diameter.*

The instantaneous GI200 is the sum of the area of all the size classes in one analysis cycle:

$$X_j = \sum_{k=1}^{4} A_{T,j,k}$$

where:

$X_j$ = instantaneous GI200 ($mm^2/24.6\ cm^3$) for analysis cycle j
4 = total number of size clauses

GI200

GI200 is defined as the trailing average of the last twenty instantaneous G1200 values:

$$<X> = \sum_{j=1}^{20} X_j / 20$$

where:

$<X>$ = GI200($mm^2/24.6cm^3$)

One analysis cycle inspects 24.6 $cm^3$ of film. The corresponding area is 0.324$m^2$ for a film thickness of 76 μm and 0.647 $m^2$ for a film thickness of 38 μm.

***Gel Content Measurement:*** When the ethylene interpolymer, either alone or contained in a composition is at least partially crosslinked, the degree of crosslinking may be measured by dissolving the composition in a solvent for specified duration, and calculating the percent gel or unextractable component. The percent gel normally increases with increasing crosslinking levels.

***Long chain branching per 1000 carbons:*** The presence of long chain branching can be determined in ethylene homopolymers by using $^{13}C$ nuclear magnetic resonance (NMR) spectroscopy and is quantified using the method described by Randall (Rev, Macromol. Chem. Phys., C29, V. 2&3, 285-297). There are other known techniques useful for determining the presence of long chain brunches in ethylene polymers, including ethylene/1-octene interpolymers. Two such exemplary methods are gel permeation chromatography coupled with a low angle laser light scattering detector (GPC-LALLS) and gel permeation chromatography coupled with a differential viscometer detector (GPC-DV). The use of these techniques for long chain branch detection and the underlying theories have been well documented in the literature. See, for example, Zimm, G. H. and Stockmayer, W. H., J. Chem. Phys., 17, 1301 (1949), and Rudin, A., Modern Methods of Polymer Characterization, John Wiley & Sons, New York (1991) 103-112.

***Ethylenic polymers of this Invention:*** The ethylenic polymers of this invention are relatively high molecular weight, relatively low density polymers that have a unique combination of (A) a relatively low total amount of unsaturation, and (B) a relatively high ratio of vinyl groups to total unsaturated groups in the polymer chain, as compared to known metallocene-catalyzed ethylenic polymers. This combination is believed to result in lower gels for end-use applications (such as films) where low gels are important, better long-term polymer stability and, for end-use applications requiring cross-linking, better control of that cross-linking, in each case while maintaining a good balance of other performance properties.

The novel polymers of this invention are interpolymers of ethylene with at least 0.1 mole percent of one or more comonomers, preferably at least one α-olefin comonomer. The α-olefin comonomer(s) may have, for example, from 3 to 20 carbon atoms. Preferably, the α-olefin comonomer may have 3 to 8 carbon atoms. Exemplary α-olefin comonomers include, but are not limited to, propylene, 1-butene, 3-methyl-1-butene, 1-pentene, 3-methyl-1-pentene, 4-methyl-1-pentene, 1-hexene, 1-heptene, 4,4-dimethyl-1-pentene, 3-ethyl-1-pentene, 1-octene, 1-nonene, 1-decene, 1-dodecene, 1-tetradecene, 1-hexadecene, 1-octadecene and 1-eicosene.

## Preparation of an Ethylenic Polymer of this Invention

For producing the ethylenic polymers of this invention, a solution-phase polymerization process may be used. Typically, such a process occurs in a well-stirred reactor such as a loop reactor or a sphere reactor at temperature from about 150 to about 300 °C, preferably from about 160 to about 180 °C, and at pressures from about 30 to about 1000 psi, preferably from about 30 to about 750 psi. The residence time in such a process is typically from about 2 to about

20 minutes, preferably from about 10 to about 20 minutes. Ethylene, solvent, catalyst, and one or more comonomers are fed continuously to the reactor. Exemplary solvents include, but are not limited to, isoparaffins. For example, such solvents are commercially available under the name ISOPAR E from ExxonMobil Chemical Co., Houston, Texas. The resultant mixture of ethylene-based polymer and solvent is then removed from the reactor and the polymer is isolated. Solvent is typically recovered via a solvent recovery unit, that is, heat exchangers and vapor liquid separator drum, and is recycled back into the polymerization system.

Suitable catalysts for use in preparing the novel polymers of this invention include any compound or combination of compounds that is adapted for preparing such polymers in the particular type of polymerization process, such as solution-polymerization, slurry-polymerization or gas-phase-polymerization processes.

In one embodiment, an ethylenic polymer of this invention is prepared in a solution-polymerization process using a polymerization catalyst that is a metal complex of a polyvalent aryloxyether corresponding to the formula:

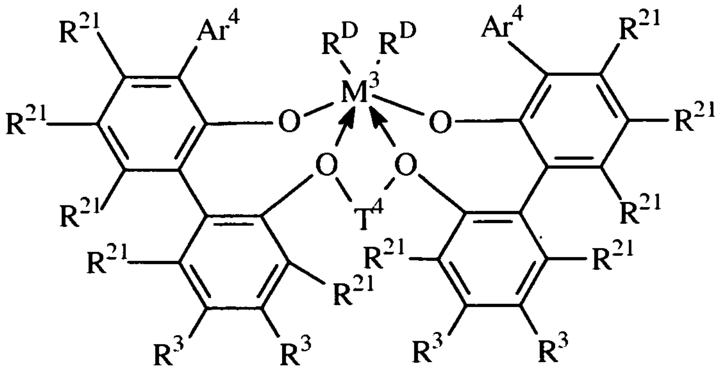

where $M^3$ is Ti, Hf or Zr, preferably Zr;

$Ar^4$ independently each occurrence is a substituted $C_{9-10}$ aryl group, wherein the substituents, independently each occurrence, are selected from the group consisting of alkyl; cycloalkyl; and aryl groups; and halo-, trihydrocarbylsilyl- and halohydrocarbyl-substituted derivatives thereof, with the proviso that at least one substituent lacks co-planarity with the aryl group to which it is attached;

$T^4$ independently each occurrence is a $C_{2-20}$ alkylene, cycloalkylene or cycloalkenylene group, or an inertly substituted derivative thereof;

$R^{21}$ independently each occurrence is hydrogen, halo, hydrocarbyl, trihydrocarbylsilyl, trihydrocarbylsilylhydrocarbyl, alkoxy or di(hydrocarbyl)amino group of up to 50 atoms not counting hydrogen;

$R^3$ independently each occurrence is hydrogen, halo, hydrocarbyl, trihydrocarbylsilyl, trihydrocarbylsilylhydrocarbyl, alkoxy or amino of up to 50 atoms not counting hydrogen, or two $R^3$ groups on the same arylene ring together or an $R^3$ and an $R^{21}$ group on the same or different arylene ring together form a divalent ligand group attached to the arylene group in two positions or join two different arylene rings together; and

$R^D$, independently each occurrence is halo or a hydrocarbyl or trihydrocarbylsilyl group of up to 20 atoms not counting hydrogen, or 2 $R^D$ groups together are a hydrocarbylene, hydrocarbadiyl, diene, or poly(hydrocarbyl)silylene group.

Such polyvalent aryloxyether metal complexes and their synthesis are described in WO 2007/136496 or WO 2007/136497, using the synthesis procedures disclosed in US-A-2004/0010103. Among the preferred polyvalent aryloxyether metal complexes are those disclosed as example 1 in WO 2007/136496 and as example A10 in WO 2007/136497. Suitable cocatalysts and polymerization conditions for use of the preferred polyvalent aryloxyether metal complexes are also disclosed in WO 2007/136496 or WO 2007/136497.

The metal complex polymerization catalyst may be activated to form an active catalyst composition by combination with one or more cocatalysts, preferably a cation forming cocatalyst, a strong Lewis acid, or a combination thereof. Suitable cocatalysts for use include polymeric or oligomeric aluminoxanes, especially methyl aluminoxane, as well as inert, compatible, noncoordinating, ion forming compounds. So-called modified methyl aluminoxane (MMAO) or triethyl aluminum (TEA) is also suitable for use as a cocatalyst. One technique for preparing such modified aluminoxane is disclosed in U.S. Patent No. 5,041,584 (Crapo et al.). Aluminoxanes can also be made as disclosed in U.S. Patent Nos. 5,542,199 (Lai et al.); 4,544,762 (Kaminsky et al.); 5,015,749 (Schmidt et al.); and 5,041,585 (Deavenport et al.).

***Polymeric Blends or Compounds of this invention:*** Various natural or synthetic polymers, and/or other components, may be blended or compounded with the novel polymers of this invention to form the polymeric compositions of this invention. Suitable polymers for blending with the embodiment ethylenic polymer include thermoplastic and non-thermoplastic polymers including natural and synthetic polymers. Suitable synthetic polymers include both ethylene-based polymers, such as high pressure, free-radical low density polyethylene (LDPE), and ethylene-based polymers prepared with Ziegler-Natta catalysts, including high density polyethylene (HDPE) and heterogeneous linear low density

polyethylene (LLDPE), ultra low density polyethylene (ULDPE), and very low density polyethylene (VLDPE), as well as multiple-reactor ethylenic polymers ("in reactor" blends of Ziegler-Natta PE and metallocene PE, such as products disclosed in U.S. Patent Nos. 6,545,088 (Kolthammer et al.); 6,538,070 (Cardwell et al.); 6,566,446 (Parikh et al.); 5,844,045 (Kolthammer et al.); 5,869,575 (Kolthammer et al.); and 6,448,341 (Kolthammer et al.)). Commercial examples of linear ethylene-based polymers include ATTANE™ Ultra Low Density Linear Polyethylene Copolymer, DOWLEX™ Polyethylene Resins, and FLEXOMER™ Very Low Density Polyethylene, all available from The Dow Chemical Company. Other suitable synthetic polymers include polypropylene, (both impact modifying polypropylene, isotactic polypropylene, atactic polypropylene, and random ethylene/propylene copolymers), ethylene/diene interpolymers, ethylene-vinyl acetate (EVA), ethylene/vinyl alcohol copolymers, polystyrene, impact modified polystyrene, ABS, styrene/butadiene block copolymers and hydrogenated derivatives thereof (SBS and SEBS), and thermoplastic, polyurethanes. Homogeneous olefin-based polymers such as ethylene-based or propylene-based plastomers or elastomers can also be useful as components in blends or compounds made with the ethylenic polymers of this invention. Commercial examples of homogeneous metallocene-catalyzed, ethylene-based plastomers or elastomers include AFFINITY™ polyolefin plastomers and ENGAGE™ polyolefin elastomers, both available from The Dow Chemical Company, and commercial examples of homogeneous propylene-based plastomers and elastomers include VERSIFY™ performance polymers, available from The Dow Chemical Company, and VISTAMAX™ polymers available from ExxonMobil Chemical Company.

The polymeric compositions of this invention include compositions comprising, or made from, the ethylenic polymer of this invention in combination (such as blends or compounds, including reaction products) with one or more other components, which other components may include, but are not limited to, natural or synthetic materials, polymers, additives, reinforcing agents, ignition resistant additives, fillers, waxes, tackifiers, antioxidants, stabilizers, colorants, extenders, crosslinkers, blowing agents, and/or plasticizers. Such polymeric compositions may include thermoplastic polyolefins (TPO), thermoplastic elastomers (TPE), thermoplastic vulcanizates (TPV) and/or styrenic/ethylenic polymer blends. TPEs and TPVs may be prepared by blending or compounding one or more ethylenic polymers of this invention (including functionalized derivatives thereof) with an optional elastomer (including conventional block copolymers, especially an SBS or SEBS block copolymer, or EPDM, or a natural rubber) and optionally a crosslinking or vulcanizing agent. A TPO polymeric composition of this invention would be prepared by blending or compounding one or more of the ethylenic polymers of this invention with one or more polyolefins (such as polypropylene). A TPE polymeric composition of this invention would be prepared by blending or compounding one or more of the ethylenic polymers of this invention with one or more elastomers (such as a styrenic block copolymer or an olefin block copolymer, such as disclosed in U.S. Patent No. 7,355,089 (Chang et al.)). A TPV polymeric composition of this invention would be prepared by blending or compounding one or more of the ethylenic polymers of this invention with one or more other polymers and a vulcanizing agent. The foregoing polymeric compositions may be used in forming a molded object, and optionally crosslinking the resulting molded article. A similar procedure using different components has been previously disclosed in U.S. Patent No. 6,797,779 (Ajbani, et al.).

***Processing Aids:*** In certain aspects of the invention, processing aids, such as plasticizers, can also be included in the polymeric composition. These aids include, but are not limited to, the phthalates (such as dioctyl phthalate and diisobutyl phthalate), natural oils (such as lanolin, and paraffin, naphthenic and aromatic oils obtained from petroleum refining), and liquid resins from rosin or petroleum feedstocks. Exemplary classes of oils useful as processing aids include white mineral oil such as KAYDOL® oil (Chemtura Corp.; Middlebury, Conn.) and SHELLFLEX® 371 naphthenic oil (Shell Lubricants; Houston, Tex.). Another suitable oil is TUFFLO® oil (Lyondell Lubricants; Houston, Tex).

*Stabilizers* ***and*** *other* ***additives:*** In certain aspects of the invention, the ethylenic polymers are treated with one or more stabilizers, for example, antioxidants, such as IRGANOX® 1010 and IRGAFOS® 168 (Ciba Specialty Chemicals; Glattbrugg, Switzerland). In general, polymers are treated with one or more stabilizers before an extrusion or other melt processes. For example, the compounded polymeric composition may comprise from 200 to 600 wppm of one or more phenolic antioxidants, and/or from 800 to 1200 wppm of a phosphite-based antioxidant, and/or from 300 to 1250 wppm of calcium stearate. In other aspects of the invention, other polymeric additives are blended or compounded into the polymeric compositions, such as ultraviolet light absorbers, antistatic agents, pigments, dyes, nucleating agents, fillers, slip agents, fire retardants, plasticizers, processing aids, lubricants, stabilizers, smoke inhibitors, viscosity control agents, and/or anti-blocking agents. The polymeric composition may, for example, comprise less than 10 percent by the combined weight of one or more of such additives, based on the weight of the ethylenic polymer.

***Other additives:*** Various other additives and adjuvants may be blended or compounded with the ethylenic polymers of this invention to form polymeric compositions, including fillers (such as organic or inorganic particles, including nano-size particles, such as clays, talc, titanium dioxide, zeolites, powdered metals), organic or inorganic fibers (including carbon fibers, silicon nitride fibers, steel wire or mesh, and nylon or polyester cording), tackifiers, waxes, and oil extenders (including paraffinic or naphthelenic oils), sometimes in combination with other natural and/or synthetic polymers.

***Cross-linking Agents:*** For those end-use applications in which it is desired to fully or partially cross-link the ethylenic polymer of this invention, any of a variety of cross-linking agents may be used. Some suitable cross-linking agents are disclosed in Zweifel Hans et al., "Plastics Additives Handbook," Hanser Gardner Publications, Cincinnati,

Ohio, 5th edition, Chapter 14, pages 725-812 (2001); Encyclopedia of Chemical Technology, Vol. 17, 2nd edition, Interscience Publishers (1968); and Daniel Seem, "Organic Peroxides," Vol. 1, Wiley-Interscience, (1970). Non-limiting examples of suitable cross-linking agents include peroxides, phenols, azides, aldehyde-amine reaction products, substituted ureas, substituted guanidines; substituted xanthates; substituted dithiocarbamates; sulfur-containing compounds, such as thiazoles, sulfenamides, thiuramidisulfides, paraquinonedioxime, dibenzoparaquinonedioxime, sulfur; imidazoles; silanes and combinations thereof. Non-limiting examples of suitable organic peroxide cross-linking agents include alkyl peroxides, aryl peroxides, peroxyesters, peroxycarbonates, diacylperoxides, peroxyketals, cyclic peroxides and combinations thereof. In some embodiments, the organic peroxide is dicumyl peroxide, t-butylisopropylidene peroxybenzene, 1,1-di-t-butyl peroxy-3,3,5-trimethylcyclohexane, 2,5-dimethyl-2,5-di(t-butyl peroxy) hexane, t-butyl-cumyl peroxide, di-t-butyl peroxide, 2,5-dimethyl-2,5-di-(t-butyl peroxy) hexyne or a combination thereof. In one embodiment, the organic peroxide is dicumyl peroxide. Additional teachings regarding organic peroxide cross-linking agents are disclosed in C. P. Park, "Polyolefin Foam", Chapter 9 of Handbook of Polymers Foams and Technology, edited by D. Klempner and K. C. Frisch, Hanser Publishers, pp. 198-204, Munich (1991). Non-limiting examples of suitable azide cross-linking agents include azidoformates, such as tetramethylenebis(azidoformate); aromatic polyazides, such as 4,4'-diphenylmethane diazide; and sulfonazides, such as p,p'-oxybis(benzene sulfonyl azide). The disclosure of azide cross-linking agents can be found in U.S. Patent Nos. 3,284,421 and 3,297,674. In some embodiments, the cross-linking agents are silanes. Any silane that can effectively graft to and/or cross-link the ethylene/$\alpha$-olefin interpolymer or the polymer blend disclosed herein can be used. Non-limiting examples of suitable silane cross-linking agents include unsaturated silanes that comprise an ethylenically unsaturated hydrocarbyl group, such as a vinyl, allyl, isopropenyl, butenyl, cyclohexenyl or gamma-(meth)acryloxy allyl group, and a hydrolyzable group such as a hydrocarbyloxy, hydrocarbonyloxy, and hydrocarbylamino group. Non-limiting examples of suitable hydrolyzable groups include methoxy, ethoxy, formyloxy, acetoxy, proprionyloxy, alkyl and arylamino groups. In other embodiments, the silanes are the unsaturated alkoxy silanes which can be grafted onto the interpolymer. Some of these silanes and their preparation methods are more fully described in U.S. Pat. No. 5,266,627. The amount of the cross-linking agent can vary widely, depending upon the nature of the ethylenic polymer or the polymeric composition to be cross-linked, the particular cross-linking agent employed, the processing conditions, the amount of grafting initiator, the ultimate application, and other factors. For example, when vinyltrimethoxysilane (VTMOS) is used, the amount of VTMOS is generally at least about 0.1 weight percent, at least about 0.5 weight percent, or at least about 1 weight percent, based on the combined weight of the cross-linking agent and the ethylenic polymer or the polymeric composition.

***End Use Applications:*** The ethylenic polymer of this invention may be employed in a variety of conventional thermoplastic fabrication processes to produce useful articles, including objects comprising at least one film layer, such as a monolayer film, or at least one layer in a multilayer film, which films may be prepared by cast, blown, calendered, or extrusion coating processes; molded articles, such as blow molded, injection molded, or rotomolded articles; extrusions; fibers; woven or non-woven fabrics; and composite or laminate structures made with any of the foregoing articles.

The ethylenic polymers of this invention (either alone or in blends or compounds with other components) may be used in producing fibers, such as staple fibers, tow, multicomponent, sheath/core, twisted, and monofilament fibers. Suitable fiber-forming processes include spunbonded and melt blown techniques, as disclosed in U.S. Patent Nos. 4,340,563 (Appel et al.), 4,663,220 (Wisneski et al.), 4,668,566 (Nohr et al.), and 4,322,027 (Reba), gel spun fibers as disclosed in U.S. Patent No. 4,413,110 (Kavesh et al.), woven and nonwoven fabrics, as disclosed in U.S. Patent No. 3,485,706 (May), or structures made from or with such fibers, including blends with other fibers (such as polyester, nylon or cotton, and drawn, twisted, or crimped yarns or fibers) or in composition or laminated structures with fibrous or non-fibrous materials (such as nonwovens or films).

The ethylenic polymers of this invention (either alone or in blends or compounds with other components) may be used in a variety of films, including but not limited to clarity shrink films, collation shrink films, cast stretch films, silage films, stretch hooder films, sealants (including heat sealing films), stand-up-pouch films, liner films, and diaper backsheets.

The ethylenic polymers of this invention (either alone or in blends or compounds with other components) are also useful in other direct end-use applications, such as for wire and cable coatings, in sheet extrusion for vacuum forming operations, and forming molded articles, including articles made via any of the known thermoplastic molding technologies, including injection molding, blow molding, or rotomolding processes. The polymeric compositions of this invention can also be formed into fabricated articles using other conventional polyolefin processing techniques.

Other suitable applications for the ethylenic polymers of this invention (either alone or in blends or compounds with other components) include films and fibers; soft touch goods, such as tooth brush handles and appliance handles; gaskets and profiles; adhesives (including hot melt adhesives and pressure sensitive adhesives); footwear (including shoe soles and shoe liners); auto interior or exterior parts and profiles; foam goods (both open and closed cell); impact modifiers for other thermoplastic polymers such as high density polyethylene, isotactic polypropylene, or other olefin polymers; coated fabrics (such as artificial leather); hoses; tubing; weather stripping; cap liners; flooring (such as hard or soft flooring and artificial turf); and viscosity index modifiers, as well as pour point modifiers, for lubricants.

Further treatment of the ethylenic polymers or polymeric compositions of this invention may be performed to

render them more suitable for other end uses. For example, dispersions (both aqueous and non-aqueous) can also be formed using ethylenic polymers or polymeric compositions of this invention, such as by a dispersion-manufacturing process. Frothed foams comprising the embodiment ethylenic polymer can also be formed, as disclosed in PCT Publication No. 2005/021622. The ethylenic polymers or polymeric compositions of this invention may also be crosslinked by any known means, such as the use of peroxide, electron beam, silane, azide, or other cross-linking technique. The ethylenic polymers or polymeric compositions of this invention can also be chemically modified, such as by grafting (for example by use of maleic anhydride (MAH), silanes, or other grafting agent), halogenation, amination, sulfonation, or other chemical modification.

All applications, publications, patents, test procedures, and other documents cited, including priority documents, are fully incorporated by reference to the extent such disclosure is not inconsistent with the disclosed compositions and methods and for all jurisdictions in which such incorporation is permitted.

EXAMPLES

All raw materials (ethylene, 1-octene) and the process solvent (a narrow boiling range high-purity isoparaffinic solvent trademarked Isopar E and commercially available from Exxon Mobil Corporation) are purified with molecular sieves before introduction into the reaction environment. Hydrogen is supplied in pressurized cylinders as a high purity grade and is not further purified. The reactor monomer feed (ethylene) stream is pressurized via mechanical compressor to above reaction pressure at 525 psig. The solvent and comonomer (1-octene) feed is pressurized via mechanical positive displacement pump to above reaction pressure at 525 psig. The individual catalyst components are manually batch diluted to specified component concentrations with purified solvent (Isopar E) and pressured to above reaction pressure at 525 psig. All reaction feed flows are measured with mass flow meters and independently controlled with computer automated valve control systems.

The continuous solution polymerization reactor consists of a liquid full, non-adiabatic, isothermal, circulating, and independently controlled loop. The reactor has independent control of all fresh solvent, monomer, comonomer, hydrogen, and catalyst component feeds. The combined solvent, monomer, comonomer and hydrogen feed to the reactor is temperature controlled to anywhere between 5°C to 50°C and typically 25°C by passing the feed stream through a heat exchanger. The fresh comonomer feed to the polymerization reactor is fed in with the solvent feed. The total fresh feed to each polymerization reactor is injected into the reactor at two locations with roughly equal reactor volumes between each injection location. The fresh feed is controlled typically with each injector receiving half of the total fresh feed mass flow. The catalyst components are injected into the polymerization reactor through specially designed injection stingers and are each separately injected into the same relative location in the reactor with no contact time prior to the reactor. The primary catalyst component feed is computer controlled to maintain the reactor monomer concentration at a specified target. The two cocatalyst components are fed based on calculated specified molar ratios to the primary catalyst component. Immediately following each fresh injection location (either feed or catalyst), the feed streams are mixed with the circulating polymerization reactor contents with Kenics static mixing elements. The contents of each reactor are continuously circulated through heat exchangers responsible for removing much of the heat of reaction and with the temperature of the coolant side responsible for maintaining isothermal reaction environment at the specified temperature. Circulation around each reactor loop is provided by a screw pump.

The effluent from the first polymerization reactor (containing solvent, monomer, comonomer, hydrogen, catalyst components, and molten polymer) exits the first reactor loop and passes through a control valve (responsible for maintaining the pressure of the first reactor at a specified target). As the stream exits the reactor it is contacted with water to stop the reaction. In addition, various additives such as antioxidants, can be added at this point. The stream then goes through another set of Kenics static mixing elements to evenly disperse the catalyst kill and additives.

Following additive addition, the effluent (containing solvent, monomer, comonomer, hydrogen, catalyst components, and molten polymer) passes through a heat exchanger to raise the stream temperature in preparation for separation of the polymer from the other lower boiling reaction components. The stream then enters a two stage separation and devolatization system where the polymer is removed from the solvent, hydrogen, and unreacted monomer and comonomer. The recycled stream is purified before entering the reactor again. The separated and devolatized polymer melt is pumped through a die specially designed for underwater pelletization, cut into uniform solid pellets, dried, and transferred into a hopper. After validation of initial polymer properties the solid polymer pellets are manually dumped into a box for storage. Each box typically hods ~1200 pounds of polymer pellets.

The non-polymer portions removed in the devolatilization step pass through various pieces of equipment which separate most of the ethylene which is removed from the system to a vent destruction unit (it is recycled in manufacturing units). Most of the solvent is recycled back to the reactor after passing through purification beds. This solvent can still have unreacted co-monomer in it that is fortified with fresh co-monomer prior to re-entry to the reactor. This fortification of the co-monomer is an essential part of the product density control method. This recycle solvent can still have some hydrogen which is then fortified with fresh hydrogen to achieve the polymer molecular weight target. A very small amount

of solvent leaves the system as a co-product due to solvent carrier in the catalyst streams and a small amount of solvent that is part of commercial grade co-monomers.

Unless otherwise stated, implicit from the context or conventional in the art, all parts and percentages are based on weight.

Table 1 describes the polymerization conditions used to produce each of the copolymers.

Unless otherwise stated, implicit from the context or conventional in the art, all parts and percentages are based on weight.

***Comparative Samples A through D and Examples 1 through 4:*** Eight ethylenic polymers are prepared in order to compare the properties of four ethylene-octene polymers (Comparative Samples A through D) prepared using a known metallocene catalyst to the properties of five ethylene-octene polymers (Examples 1 through 4) of this invention.

Table 1 describes the polymerization conditions used to produce each of the copolymers, with those conditions being set to produce pairs of polymers (e.g., Comparative Sample A and Example 1 are one pair) with comparable melt indices (I2) and densities

Table 1

| Run | Product | Example | Catalyst | MI (12) | Density | Reactor Temp (C) | Solvent/ C2 Ratio | C2 Conv (%) | Corrected Exit C2 (g/L) | Reactor Poly Conc. (Wt%) | H2 Mole % | Octene/ Olefin Ratio |
|---|---|---|---|---|---|---|---|---|---|---|---|---|
| 2007C28R04 | 8200 | Comp A | 1301/RIB S2/MMA O | 4.7 | 0.8686 | 120.1 | 4.6 | 86.7 | 15.75 | 24.5 | 0.17 | 47.7 |
| 2007C28R06 | | 1 | 6114/RIB S2/MMA O | 4.3 | 0.8715 | 190 | 4.79 | 84.8 | 16.06 | 26.4 | 0.32 | 62.3 |
| 2007C28R01 | 8150 | Comp B | 1301/RIB S2/MMA O | 0.5 | 0.868 | 103 | 6.23 | 83.4 | 16 | 19.6 | -- | -- |
| 2007C28R12 | | 2 | 6114/RIB S2/MMA O | 0.5 | 0.8684 | 169.6 | 6.23 | 80.9 | 14.55 | 21.4 | 0.2 | 66.5 |
| 2007C28R02 | 8100 | Comp C | 1301/RIB S2/MMA O | 1 | 0.87 | 110 | 5.22 | 84.6 | 17 | 22.5 | -- | -- |
| 2007C28R10 | | 3 | 6114/RIB S2/MMA O | 0.9 | 0.8709 | 185 | 5.22 | 82.5 | 17.2 | 23.3 | 0.21 | 64.6 |
| 2007C28R03 | 8452 | Comp D | 1301/RIB S2/MMA O | 3 | 0.875 | 115 | 5.22 | 87.3 | 14 | 22.4 | -- | -- |
| 2007C28R11 | | 4 | 6114/RIB S2/MMA O | 2.8 | 0.8764 | 180 | 5.22 | 86.3 | 13.74 | 23.6 | 0.32 | 57.8 |

CAS name for RIBS-2: Amines, bis(hydrogenated tallow alkyl)methyl, tetrakis(pentafluorophenyl)borate(1-)
CAS name for DOC-6114: Zirconium, [2,2'''-[1,3-propanediylbis(oxy-κO)]bis[3",5,5"-tris(1,1-dimethylethyl)-5'-methyl[1,1':3',1"-terphenyl]-2'-olato-κO]]dimethyl-, (OC-6-33)-
MMAO = modified methyl aluminoxane
CAS numbers for CGC 1301: 199876-48-7 and 200074-30-2

Table 2: Summary of properties of Comp A-D and Examples 1-4

| Example | Catalyst | Melt Flow Ratio I10/I2 | Mw | Mn | Mw/Mn | Total unsaturation per 1000 C | Vinyl groups/ Olefin groups | Octene mol% by $C^{13}$ NMR | Vinyls/ 1000 carbons | Sum of unsaturation per 100000 C |
|---|---|---|---|---|---|---|---|---|---|---|
| Comp A | 1301/RIBS2/MMAO | 7.7 | 91100 | 37346 | 2.44 | 0.148 | 0.18 | 12.62 | 0.03 | 148 |
| 1 | 6114/RIBS2/MMAO | 7.45 | 92530 | 38376 | 2.41 | 0.122 | 0.52 | 11.65 | 0.06 | 122 |
| Comp B | 1301/RIBS2/MMAO | 7.9 | 151250 | 62793 | 2.41 | 0.0825 | 0.17 | 12.64 | 0.01 | 82.5 |
| 2 | 6114/RIBS2/MMAO | 7.98 | 147010 | 66333 | 2.22 | 0.0845 | 0.49 | 14.18 | 0.04 | 84.5 |
| Comp C | 1301/RIBS2/MMAO | 7.6 | 124860 | 52795 | 2.36 | 0.085 | 0.16 | 12.13 | 0.01 | 85 |
| 3 | 6114/RIBS2/MMAO | 8.33 | 126490 | 55977 | 2.26 | 0.118 | 0.52 | 11.85 | 0.06 | 118 |
| Comp D | 1301/RIBS2/MMAO | 7.6 | 93540 | 35174 | 2.66 | 0.114 | 0.18 | 11.09 | 0.02 | 114 |
| 4 | 6114/RIBS2/MMAO | 7.4 | 94390 | 40946 | 2.31 | 0.0835 | 0.58 | 10.48 | 0.05 | 83.5 |

Table 3: Details of $H^1$ NMR data on unsaturations for examples of Tables 1 and 2

| **Structure Name** | Vinylene (*trans*) | Vinylene (*cis*) | Internal Vinylene | Trisubstitute (internal) | Vinyl | Symmetric Vinylidene | Asymmetric Vinylidene | |
|---|---|---|---|---|---|---|---|---|
| **Structure Code** | Vy1-*trans* Vy2-*trans* | Vy1-*cis* Vy2-*cis* | Vy3 | T3, T4 (mainly T4) | V1 | Vd3 | Vd1 | |
| **Peak position** | 5.49 | 5.44 | 5.43 5.26 | 5.28-5.18 | 5.04 5.90 | 4.80 | 4.86 4.81 | **Example Number** |
| | Per 1000000 C's | Per 1000000 C's | Per 1000000 C's | Per 1000000 C's | Per 1000000 C's | Per 1000000 C's | Per 1000000 C's | |
| 2007C28R04 | 40.5 | 12.5 | 13.5 | 21.5 | 26 | 27.5 | 6.5 | **Comp A** |
| 2007C28R06 | 10 | 9 | 0 | 13.5 | 63 | 14.5 | 12 | **1** |
| 2007C28R01 | 30 | 5.5 | 6 | 9.5 | 14 | 14 | 3.5 | **Comp B** |
| 2007C28R12 | 7.5 | 6 | 0 | 11 | 41.5 | 8 | 10.5 | **2** |
| 2007C28RO2 | 31.5 | 6.5 | 6.5 | 8 | 14 | 15.5 | 3 | **Comp C** |
| 2007C28R10 | 10 | 7.5 | 0 | 12.5 | 61 | 13.5 | 13.5 | **3** |
| 2007C28R03 | 32.5 | 10 | 8 | 15 | 20 | 23.5 | 5 | **Comp D** |
| 2007C28R11 | 7 | 5.5 | 0 | 8.5 | 48.5 | 7 | 7 | **4** |

## Claims

1. An ethylenic polymer comprising an overall polymer density of not more than 0.905 g/cm$^3$; total unsaturation of not more than 125 per 100,000 carbons; and a GI200 gel rating of not more than 15; up to 3 long chain branches/1000 carbons; vinyl-3 content of less than 5 per 100,000 carbons; and a total number of vinyl groups/1000 carbons of less than the quantity (8000/$M_n$), wherein the vinyl-3 content and vinyl group measurements are measured by gel permeation chromatography (145°C) and $^1$H-NMR (125°C).

2. The ethylenic polymer of claim 1 further comprising a ratio of vinyl groups to total olefin groups according to the formula:

$$VG/TOG > (\text{comonomer mole percentage}/0.1)^a \times 10^a \times 0.8$$

where a = -0.24, VG = vinyl groups, and TOG = total olefin groups.

3. An ethylenic polymer comprising total unsaturation of from about 10 to about 125 per 100,000 carbons total unsaturation; and up to 3 long chain branches/1000 carbons; and a GI200 gel rating of not more than 15.

4. The ethylenic polymer of claim 1 further comprising a vinyls amount and a total unsaturation amount, wherein the ratio of vinyls amount:total unsaturation amount is at least 0.2:1, and wherein the ethylenic polymer has less than 5 per 100,000 carbons of vinyl-3 content.

5. The ethylenic polymer of claim 1 further comprising a vinyls amount and a total unsaturation amount, wherein the ratio of vinyls amount:total unsaturation amount is at least 0.3:1.

6. The ethylenic polymer of claim 5 wherein the ratio of vinyls amount: total unsaturation amount is from about 0.4:1 to about 0.8:1.

7. The ethylenic polymer of claim 1, wherein the polymer has less than 5 per 100,000 carbons of vinyl-3 content.

8. A composition comprising, or made from, at least one ethylenic polymer of claim 1, wherein at least a portion of the ethylenic polymer has been cross-linked.

9. A composition comprising, or made from, at least one ethylenic polymer of claim 1, in which at least a portion of the ethylenic polymer has been functionalized.

10. A composition comprising, or made from, at least one ethylenic polymer of claim 1 and at least one other natural or synthetic polymer.

11. The composition of claim 10 in which at least one of the other natural or synthetic polymer(s) is selected from the group consisting of at least one thermoplastic, at least one elastomeric olefin polymer and at least one styrenic block copolymer.

12. A composition comprising, or made from, at least one ethylenic polymer of claim 1 and at least one other component selected from the group consisting of a tackifier, a wax, and an oil.

13. A composition comprising a dispersion or emulsion of particles in a fluid, wherein the particles comprise, or are made from, at least one ethylenic polymer of claim 1.

14. An ethylenic polymer comprising an overall polymer density of not more than 0.9 g/cm$^3$; total unsaturation of not more than 125 per 100,000 carbons; a GI200 gel rating of not more than 15; vinyl-3 content of less than 5 per 100,000 carbons; and a vinyls amount and a total unsaturation amount, wherein the ratio of vinyls amount:total unsaturation amount is between 0.4:1 and 0.8:1.

15. A fabricated article in which at least one layer or portion of the fabricated article comprises, or is made from, at least one ethylenic polymer of claim 1 and in which the fabricated article comprises a film, a sheet, a fiber, a nonwoven,

a laminate, or a composite.

**Patentansprüche**

1. Ein ethylenisches Polymer, das eine Gesamtpolymerdichte von nicht mehr als 0,905 g/cm$^3$, eine Gesamtungesättigtheit von nicht mehr als 125 pro 100 000 Kohlenstoffe und eine GI200-Gelwertung von nicht mehr als 15, bis zu 3 Langkettenverzweigungen/1000 Kohlenstoffe, einen Vinyl-3-Gehalt von weniger als 5 pro 100 000 Kohlenstoffe und eine Gesamtzahl von Vinylgruppen/1000 Kohlenstoffe von weniger als der Quantität ($8000/M_n$) beinhaltet, wobei die Messungen des Vinyl-3-Gehalts und der Vinylgruppen durch Gelpermeationschromatographie (145 °C) und $^1$H-NMR (125 °C) gemessen werden.

2. Ethylenisches Polymer gemäß Anspruch 1, das ferner ein Verhältnis von Vinylgruppen zu Gesamtolefingruppen gemäß der folgenden Formel beinhaltet:

$$\text{VG/GOG} > (\text{Comonomer-Molprozentanteil}/0{,}1)^a \times 10^a \times 0{,}8$$

wobei a = -0,24, VG = Vinylgruppen und GOG = Gesamtolefingruppen.

3. Ein ethylenisches Polymer, das eine Gesamtungesättigtheit von etwa 10 bis etwa 125 pro 100 000 Kohlenstoffe Gesamtungesättigtheit und bis zu 3 Langkettenverzweigungen/1000 Kohlenstoffe und eine GI200-Gelwertung von nicht mehr als 15 beinhaltet.

4. Ethylenisches Polymer gemäß Anspruch 1, das ferner einen Vinylbetrag und einen Gesamtungesättigtheitsbetrag beinhaltet, wobei das Verhältnis von Vinylbetrag:Gesamtungesättigtheitsbetrag mindestens 0,2:1 beträgt und wobei das ethylenische Polymer weniger als 5 pro 100 000 Kohlenstoffe an Vinyl-3-Gehalt aufweist.

5. Ethylenisches Polymer gemäß Anspruch 1, das ferner einen Vinylbetrag und einen Gesamtungesättigtheitsbetrag beinhaltet, wobei das Verhältnis von Vinylbetrag:Gesamtungesättigtheitsbetrag mindestens 0,3:1 beträgt.

6. Ethylenisches Polymer gemäß Anspruch 5, wobei das Verhältnis von Vinylbetrag:Gesamtungesättigtheitsbetrag von etwa 0,4:1 bis etwa 0,8:1 beträgt.

7. Ethylenisches Polymer gemäß Anspruch 1, wobei das Polymer weniger als 5 pro 100 000 Kohlenstoffe an Vinyl-3-Gehalt aufweist.

8. Eine Zusammensetzung, die mindestens ein ethylenisches Polymer gemäß Anspruch 1 beinhaltet oder aus mindestens einem ethylenischen Polymer gemäß Anspruch 1 hergestellt ist, wobei mindestens ein Teil des ethylenischen Polymers vernetzt worden ist.

9. Eine Zusammensetzung, die mindestens ein ethylenisches Polymer gemäß Anspruch 1 beinhaltet oder aus mindestens einem ethylenischen Polymer gemäß Anspruch 1 hergestellt ist, wobei mindestens ein Teil des ethylenischen Polymers funktionalisiert worden ist.

10. Eine Zusammensetzung, die mindestens ein ethylenisches Polymer gemäß Anspruch 1 und mindestens ein weiteres natürliches oder synthetisches Polymer beinhaltet oder aus mindestens einem ethylenischen Polymer gemäß Anspruch 1 und mindestens einem weiteren natürlichen oder synthetischen Polymer hergestellt ist.

11. Zusammensetzung gemäß Anspruch 10, wobei mindestens eines des weiteren natürlichen oder synthetischen Polymers/der weiteren natürlichen oder synthetischen Polymere aus der Gruppe ausgewählt ist, die aus mindestens einem Thermoplasten, mindestens einem elastomeren Olefinpolymer und mindestens einem Styrolblockcopolymer besteht.

12. Eine Zusammensetzung, die mindestens ein ethylenisches Polymer gemäß Anspruch 1 und mindestens eine weitere Komponente beinhaltet oder aus mindestens einem ethylenischen Polymer gemäß Anspruch 1 und mindestens einer weiteren Komponente hergestellt ist, wobei die weitere Komponente aus der Gruppe ausgewählt ist, die aus

einem Klebrigmacher, einem Wachs und einem Öl besteht.

13. Eine Zusammensetzung, die eine Dispersion oder Emulsion von Partikeln in einem Fluid beinhaltet, wobei die Partikel mindestens ein ethylenisches Polymer gemäß Anspruch 1 beinhalten oder aus mindestens einem ethylenischen Polymer gemäß Anspruch 1 hergestellt sind.

14. Ein ethylenisches Polymer, das eine Gesamtpolymerdichte von nicht mehr als 0,9 g/cm$^3$, eine Gesamtungesättigtheit von nicht mehr als 125 pro 100 000 Kohlenstoffe, eine GI200-Gelwertung von nicht mehr als 15, einen Vinyl-3-Gehalt von weniger als 5 pro 100 000 Kohlenstoffe und einen Vinylbetrag und einen Gesamtungesättigtheitsbetrag beinhaltet, wobei das Verhältnis von Vinylbetrag:Gesamtungesättigtheitsbetrag zwischen 0,4:1 und 0,8:1 liegt.

15. Ein gefertigter Gegenstand, wobei mindestens eine Schicht oder mindestens ein Teil des gefertigten Gegenstands mindestens ein ethylenisches Polymer gemäß Anspruch 1 beinhaltet oder aus mindestens einem ethylenischen Polymer gemäß Anspruch 1 hergestellt ist und wobei der gefertigte Gegenstand einen Film, eine Folie, eine Faser, ein Vlies, ein Laminat oder einen Verbundstoff beinhaltet.

**Revendications**

1. Un polymère éthylénique comprenant une densité de polymère apparente n'excédant pas 0,905 g/cm$^3$ ; une insaturation totale n'excédant pas 125 pour 100 000 carbones ; une appréciation de gel GI200 n'excédant pas 15 ; jusqu'à 3 ramifications en chaîne longue/1 000 carbones ; une teneur en vinyle-3 inférieure à 5 pour 100 000 carbones ; et un nombre total de groupes vinyle/1 000 carbones inférieur à la quantité (8 000 / $M_n$), les mesures de teneur en vinyle-3 et de groupes vinyle étant mesurées par chromatographie par perméation de gel (145 °C) et RMN-$^1$H (125 °C).

2. Le polymère éthylénique de la revendication 1 comprenant en outre une proportion de groupes vinyle par rapport aux groupes oléfine totaux selon la formule :

$$VG/TOG > (\text{pourcentage molaire de comonomère}/0{,}1)^a \times 10^a \times 0{,}8$$

où a = - 0,24, VG = groupes vinyle, et TOG = groupes oléfine totaux.

3. Un polymère éthylénique comprenant une insaturation totale allant d'environ 10 à environ 125 pour une insaturation totale de 100 000 carbones ; et jusqu'à 3 ramifications en chaîne longue/1 000 carbones ; et une appréciation de gel GI200 n'excédant pas 15.

4. Le polymère éthylénique de la revendication 1 comprenant en outre une quantité de vinyles et une quantité d'insaturation totale, dans lequel la proportion quantité de vinyles/quantité d'insaturation totale est d'au moins 0,2/1, et dans lequel le polymère éthylénique a une teneur en vinyle-3 inférieure à 5 pour 100 000 carbones.

5. Le polymère éthylénique de la revendication 1 comprenant en outre une quantité de vinyles et une quantité d'insaturation totale, dans lequel la proportion quantité de vinyles/quantité d'insaturation totale est d'au moins 0,3/1.

6. Le polymère éthylénique de la revendication 5 dans lequel la proportion quantité de vinyles/quantité d'insaturation totale va d'environ 0,4/1 à environ 0,8/1.

7. Le polymère éthylénique de la revendication 1, dans lequel le polymère a une teneur en vinyle-3 inférieure à 5 pour 100 000 carbones.

8. Une composition comprenant, ou réalisée à partir de, au moins un polymère éthylénique de la revendication 1, dans laquelle une portion au moins du polymère éthylénique a été réticulée.

9. Une composition comprenant, ou réalisée à partir de, au moins un polymère éthylénique de la revendication 1, dans laquelle une portion au moins du polymère éthylénique a été fonctionnalisée.

**10.** Une composition comprenant, ou réalisée à partir de, au moins un polymère éthylénique de la revendication 1 et au moins un autre polymère synthétique ou naturel.

**11.** La composition de la revendication 10 dans laquelle au moins un polymère parmi le ou les autres polymères synthétiques ou naturels est sélectionné dans le groupe constitué d'au moins un thermoplastique, au moins un polymère d'oléfine élastomérique et au moins un copolymère bloc styrène.

**12.** Une composition comprenant, ou réalisée à partir de, au moins un polymère éthylénique de la revendication 1 et au moins un autre composant sélectionné dans le groupe constitué d'un agent poisseux, d'une cire, et d'une huile.

**13.** Une composition comprenant une dispersion ou émulsion de particules dans un fluide, dans laquelle les particules comprennent, ou sont réalisées à partir de, au moins un polymère éthylénique de la revendication 1.

**14.** Un polymère éthylénique comprenant une densité de polymère apparente n'excédant pas 0,9 g/$cm^3$ ; une insaturation totale n'excédant pas 125 pour 100 000 carbones ; une appréciation de gel GI200 n'excédant pas 15 ; une teneur en vinyle-3 inférieure à 5 pour 100 000 carbones ; et une quantité de vinyles et une quantité d'insaturation totale, la proportion quantité de vinyles/quantité d'insaturation totale étant comprise entre 0,4/1 et 0,8/1.

**15.** Un article fabriqué dans lequel au moins une couche ou portion de l'article fabriqué comprend, ou est réalisée à partir de, au moins un polymère éthylénique de la revendication 1 et dans lequel l'article fabriqué comprend un film, une feuille, une fibre, un non tissé, un stratifié, ou un composite.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P5272236 A
- US P5278272 A
- WO 9308221 A
- GB PL26500101 A
- GB PL26500102 A
- WO 2007136496 A
- WO 2007136497 A
- US 20040010103 A
- US 5041584 A, Crapo
- US 5542199 A, Lai
- US 4544762 A, Kaminsky
- US 5015749 A, Schmidt
- US 5041585 A, Deavenport
- US 6545088 B, Kolthammer
- US 6538070 B, Cardwell
- US 6566446 B, Parikh
- US 5844045 B, Kolthammer
- US 5869575 B, Kolthammer
- US 6448341 B, Kolthammer
- US 7355089 B, Chang
- US 6797779 B, Ajbani
- US 3284421 A
- US 3297674 A
- US 5266627 A
- US 4340563 A, Appel
- US 4663220 A, Wisneski
- US 4668566 A, Nohr
- US 4322027 A, Reba
- US 4413110 A, Kavesh
- US 3485706 A, May
- WO 2005021622 W


### Non-patent literature cited in the description


- **MOUREY ; BALKE.** Chromatography Polym. 1992
- **BALKE ; THITIRATSAKUL ; LEW ; CHEUNG ; MOUREY.** Chromatography Polym. 1992
- **ZIMM, B.H.** *J. Chem. Phys.,* 1948, vol. 16, 1099
- **KRATOCHVIL, P.** Classical Light Scattering from Polymer Solutions. Elsevier, 1987
- **J. C. RANDALL et al.** NMR and Macromolecules. ACS Symposium series 247, 1984
- **J. C. RANDALL.** Polymer Sequence Determination. Academic Press, 1977
- **XH. QIU ; O.D. REDWINE ; G. GOBBI ; A. NUAMTHANOM ; P.L. RINALDI.** *Macromolecules,* 2007, vol. 40, 6879
- **M.R. SEGER ; G.E. MACIEL.** *Anal. Chem.,* 2004, vol. 76, 5734
- **RANDALL.** *Rev, Macromol. Chem. Phys.,* vol. 2, 3 (C29), 285-297
- **ZIMM, G. H. ; STOCKMAYER, W. H.** J. Chem. Phys. 1949, vol. 17, 1301
- **RUDIN, A.** Modern Methods of Polymer Characterization. John Wiley & Sons, 1991, 103-112
- **ZWEIFEL HANS et al.** Plastics Additives Handbook. Hanser Gardner Publications, 2001, 725-812
- Encyclopedia of Chemical Technology. Interscience Publishers, 1968, vol. 17
- **DANIEL SEEM.** Organic Peroxides. Wiley-Interscience, 1970, vol. 1
- Polyolefin Foam. **C. P. PARK.** Handbook of Polymers Foams and Technology. Hanser Publishers, 1991, 198-204